# EUROPEAN PATENT APPLICATION

(11) **EP 1 555 470 A1**
(43) Date of publication of application: **20.07.2005**
(21) Application number: 04030953.6
(22) Date of filing: 29.12.2004
(51) Int. Cl.: F16K 17/04

(54) **Method of processing valve mechanism**

(30) Priority: 13.01.2004 JP 2004005945
(71) Applicant: Kabushiki Kaisha Toyota Jidoshokki, Kariya-shi, Aichi-ken 448-8671 (JP)
(72) Inventor: Umemura, Satoshi, Kariya-shi Aichi-ken 448-8671 (JP); Hirose, Tatsuya, Kariya-shi Aichi-ken 448-8671 (JP)
(74) Representative: HOFFMANN - EITLE

(57) **Abstract**

A method of processing a valve mechanism which includes a valve body (18) having a shut-off surface (18a) in the form of a convex spherical surface, a valve hole (16), a valve seat (24) formed by an opening of the valve hole (16), and a spring which urges the valve body (18) toward the valve seat (24), wherein the valve mechanism is so formed that the valve body (18) resists the urging force of the spring in accordance with the pressure increase in the valve hole to be separate from the valve seat (24), includes the steps of: preparing a processing tool (31) having a processing surface in the form of a convex spherical surface which has the same curvature radius as the shut-off surface (18a) of the valve body (18); positioning the processing tool (31) to the valve seat (24); and forming the valve seat (24) along the form of the processing surface by pushing the processing surface of the processing tool against the valve seat (24).

## Description

### BACKGROUND OF THE INVENTION

The present invention relates to a valve mechanism formed by a differential pressure regulating valve, for example, for use in a refrigerating circuit for an air conditioner.

The refrigerating circuit for the air conditioner has used at various portions thereof valve mechanisms formed by the differential pressure regulating valves in order to adjust various pressures in the refrigerating circuit. A valve mechanism disclosed in Japanese Unexamined Patent Publication No. 11-324909 relieves the pressure in a crank chamber of a refrigerant compressor which forms a refrigerating circuit to a low-pressure region in the refrigerating circuit when the pressure becomes extraordinarily high.

Specifically, the valve mechanism includes a spherical valve body, a valve hole in communication with the crank chamber, a valve seat formed by the opening of the valve hole, and a spring which urges the valve body toward the valve seat. When the pressure in the crank chamber becomes extraordinarily high, force applied to the valve body in a valve opening direction increases in accordance with the pressure in the valve hole. Therefore, the valve body is separated from the valve seat so as to resist the urging force of the spring, thereby relieving the pressure in the crank chamber to a low-pressure region through the valve hole and an opening between the valve body and the valve seat.

As a valve mechanism for use in the refrigerating circuit, in addition to the valve mechanism which prevents the pressure in the crank chamber of the aforementioned refrigerant compressor from becoming extraordinarily high, a valve mechanism (a relief valve) which relieves extraordinarily high pressure of a high-pressure region in a refrigerating circuit to the atmosphere is mentioned. The valve mechanism which is used as a relief valve may have a structure similar to the valve mechanism, which prevents the pressure in the crank chamber of the refrigerant compressor from becoming extraordinarily high.

However, the valve mechanism is formed so that the valve body is urged toward the valve seat by the urging force of the spring. Therefore, under the circumstances where the differential pressure is not applied to the valve body, for example, when the valve mechanism is assembled, the valve body is urged against the valve seat with relatively large force by the urging force of the spring. In addition, the spherical valve body is in contact with the valve seat in a sort of angled state. Therefore, the valve body is pushed against the valve seat with relatively large force, thereby plastically deforming the valve seat along the form of a part of the outer surface (the spherical surface) of the valve body.

When the valve mechanism is assembled, no attention is paid to it that the valve body which is directly held, is contacted with the valve seat in a suitable position. Therefore, a contacting position of the valve body with the valve seat may deviate from the suitable position. When the valve body is pushed against the valve seat in the state of being deviated from the suitable position and the valve seat is plastically deformed, accordingly, the valve hole cannot be securely shut off by the valve body which is stabilized in such a state that the valve body contacts the valve seat along the form of the plastic deformation. Therefore, even if the pressure in the valve hole is not extraordinarily high, there is a problem that a refrigerant gas leaks from the valve hole to a valve chamber through the opening between valve body and the valve seat, thereby causing deterioration of the performance of the refrigerating circuit.

In particular, the valve mechanism, which is used as the relief valve, requires the spring which pushes the valve body against the valve seat so as to resist relatively large pressure differential between the high-pressure region in the refrigerating circuit and the atmosphere. That is, the spring requires relatively large urging force, for example, compared to the valve mechanism, which prevents the pressure in the crank chamber of the refrigerant compressor from becoming extraordinarily high. Therefore, when the relief valve is assembled, the valve body is pushed against the valve seat with further large force by relatively large urging force of the spring, thereby easily plastically deforming the valve seat.

This problem gets further serious in a case where the refrigerating circuit uses a carbon dioxide as a refrigerant, for in a case where the carbon dioxide is used as the refrigerant the high-pressure region in the refrigerating circuit becomes further high pressure in comparison with a case that a chlorofluorocarbon is used as the refrigerant, thereby requiring the spring which has further large urging force.

### SUMMARY OF THE INVENTION

The present invention is directed to a method of processing a valve mechanism in which a valve body in contact with a valve seat securely closes a valve hole.

The present invention produces a method of processing a valve mechanism which includes a valve body having a shut-off surface in the form of a convex spherical surface, a valve hole whose opening degree is adjusted by the valve body, a valve seat formed by an opening of the valve hole, and a spring which urges the valve body toward the valve seat. The valve mechanism is so formed that the valve body resists the urging force of the spring in accordance with the pressure increase in the valve hole to be separate from the valve seat. The method includes the steps of: preparing a processing tool having a processing surface in the form of a convex spherical surface which has the same curvature radius as the shut-off surface of the valve body; positioning the processing tool to the valve seat; and forming the valve seat along the form of the processing surface by pushing the processing surface of the processing tool against the valve seat.

The present invention also produces a tool for processing a valve seat being used upon processing a valve mechanism which includes a valve body having a shut-off surface in the form of a convex spherical surface, a valve hole whose opening degree is adjusted by the valve body, the valve seat formed by an opening of the valve hole, and a spring which urges the valve body toward the valve seat. The valve mechanism is so formed that the valve body resists the urging force of the spring in accordance with the pressure increase in the valve hole to be separate from the valve seat. The processing tool includes a processing surface in the form of a convex spherical surface having the same curvature radius as the shut-off surface of the valve body.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments, together with the accompanying drawing, in which:
FIG. 1 is a longitudinal sectional view showing a relief valve;
FIG. 2 is a diagram illustrating a process for producing the relief valve; and
FIG. 3 is a diagram illustrating a process for producing another relief valve.

### DETAILED DESCRIPTION OF THE PREFERRED EMBODIMENTS

A method of processing a valve mechanism according to a preferred embodiment of the present invention will now be described below. The present preferred embodiment is embodied in a method of processing a relief valve for use in a refrigerating circuit of an air conditioner functioning as a fluid circuit.

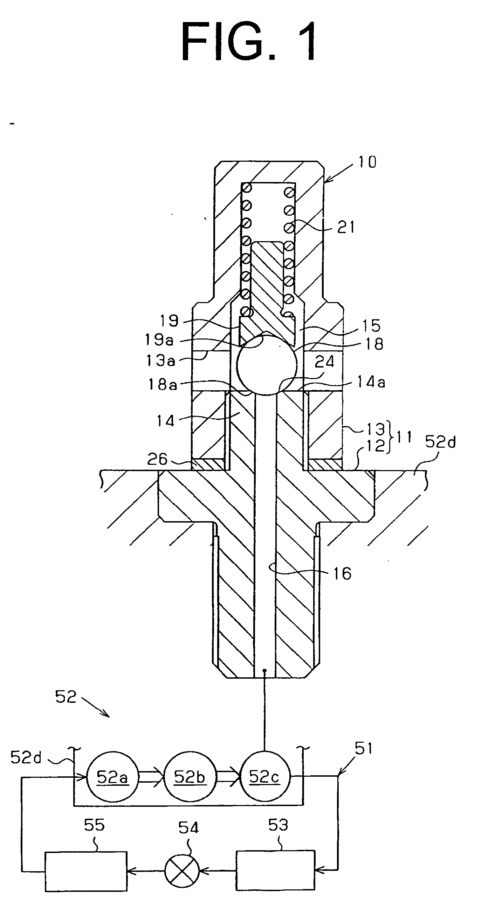

First of all, the refrigerating circuit for the air conditioner will be described. As shown in FIG. 1, a refrigerating circuit 51 includes a refrigerant compressor 52, a gas cooler 53, an expansion valve 54 and an evaporator 55. The refrigerant compressor 52 also includes a suction chamber 52a, a compression chamber 52b, a discharge chamber 52c and a compressor housing 52d. The refrigerant compressor 52 introduces a refrigerant gas from the suction chamber 52a into the compression chamber 52b, compresses the introduced refrigerant gas therein, and discharges the compressed refrigerant gas into the discharge chamber 52c. The gas cooler 53 cools down the refrigerant gas of high pressure from the discharge chamber 52c of the refrigerant compressor 52. The expansion valve 54 throttles the refrigerant gas from the gas cooler 53. The evaporator 55 evaporates the refrigerant gas from the expansion valve 54. A carbon dioxide is used as the refrigerant gas in the refrigerating circuit 51. The refrigerant compressor 52 is equipped with a relief valve 10.

A structure of the relief valve 10 will now be described. Still referring to FIG. 1, the relief valve 10 has a valve housing 11 which forms a configuration thereof. The valve housing 11 includes a first body 12 and a second body 13. The first body 12 is screwed into the compressor housing 52d of the refrigerant compressor 52. The second body 13 is screwed onto the first body 12 while arranged outside the compressor housing 52d. The first body 12 has a partitioning portion 14 which is screwed into the second body 13. The partitioning portion 14 of the first body 12 and the second body 13 define a valve chamber 15. The partitioning portion 14 separates the valve chamber 15 from the discharge chamber 52c which is defined in the compressor housing 52d of the refrigerant compressor 52. The partitioning portion 14 has an end face 14a which faces the valve chamber 15. The end face 14a has a flat shape.

The first body 12 has formed therethrough a communication hole 16 which extends in a direction perpendicular to the end face 14a of the partitioning portion 14. The communication hole 16 interconnects the valve chamber 15 and the discharge chamber 52c. The discharge chamber 52c is regarded as a high-pressure region in the refrigerating circuit 51. The second body 13 has a circular wall which surrounds the valve chamber15, and the circular wall has formed a plurality of ports 13a which radially extends therethrough. The valve chamber 15 is opened to the atmosphere through the ports 13a. That is, the discharge chamber 52c of the refrigerant compressor 52 and the atmosphere are in communication via the communication hole 16, the valve chamber 15 and the ports 13a.

The valve chamber 15 has accommodated therein a valve body 18 which is formed by a spherical body made of steel. The valve body 18 is movable with respect to the end face 14 of the partitioning portion 14 in a direction in which the valve body 18 is contacted with or separated from the partitioning portion 14. The valve chamber 15 also has accommodated therein a spring seat 19, which is movable in the valve chamber 15. The spring seat 19 has a seating face 19a in the form of a conical hollow surface on the side of the end face 14a of the partitioning portion 14. The seating face 19a of the seat spring 19 is contacted with the valve body 18. The valve chamber 15 further has accommodated therein a spring 21 made of a coil spring. The spring seat 19 is located on the opposite side to the partitioning portion 14 in the valve chamber 15 and supported through the spring 21 by the second body 13. The spring 21 urges the valve body 18 toward the end face 14a of the partitioning portion 14 through the spring seat 19.

The end of the communication hole 16 located on the side of the valve chamber 15 is opened on the end face 14a of the partitioning portion 14. In a state where the valve body 18 contacts the end face 14a of the partitioning portion 14, a part of the outer surface (spherical surface) of the valve body 18, in other words, a shut-off surface 18a in the form of a convex spherical surface is contacted with the opening of the communication hole 16 in a circular region, thereby shutting off the communication between the communication hole 16 and the valve chamber 15. That is, the communication hole 16 forms a valve hole, and the opening of the communication hole 16, which is formed on the end face 14a of the partitioning portion 14, forms a valve seat 24. The valve seat 24 is plated with a material such as tin, thereby relaxing a plastic deformation caused by the contact with the valve body 18. Consequently, a sealing performance between the valve seat 24 and the valve body 18 is improved.

In a case where the pressure in the discharge chamber 52c of the refrigerant compressor 52 is not extraordinarily high, the force applied to the valve body 18 in a valve opening direction (upward in FIG. 1) becomes small in accordance with the pressure in the communication hole 16. In this case, since the urging force of the spring 21 roughly controls the position of the valve body 18, the valve body 18 is in contact with the valve seat 24. Therefore, the valve body 18 shuts off the communication between the communication hole 16 and the valve chamber 15, thereby preventing the refrigerant gas in the discharge chamber 52c from being released into the atmosphere.

From this state, if the pressure in the discharge chamber 52c is about to rise extraordinarily high for any reason, the force applied to the valve body 18 in the valve opening direction (upward in FIG. 1) becomes excessive in accordance with the pressure in the communication hole 16. Therefore, the valve body 18 is moved against the urging force of the spring 21 so as to be separate from the seat valve 24. When the communication hole 16 is connected to the valve chamber 15 by the movement of the valve body 18, the refrigerant gas in the discharge chamber 52c is released into the atmosphere through the communication hole 16, the valve chamber 15 and the ports 13a, thereby preventing the pressure in the discharge chamber 52c from extraordinarily rising.

The pressure in the discharge chamber 52c at the time when the valve body 18 starts to be separate from the valve seat 24, in other words, the pressure in the discharge chamber 52c upon opening the relief valve 10, is set by adjusting the thickness of a shim 26 interposed between the first body 12 and the second body 13. That is, by adjusting the thickness of the shim 26, not only a screwing amount of the first body 12 (the partitioning portion 14) to the second body 13 but also the strength of the urging force of the spring 21, which is applied to the valve body 18 in contact with the valve seat 24, is adjusted.

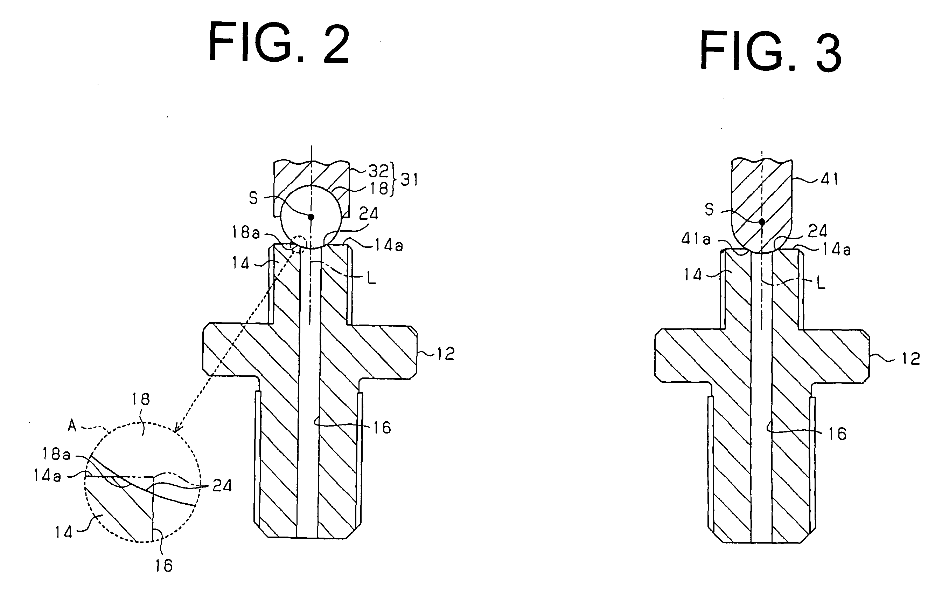

A method of processing the relief valve 10 will now be described. Referring to FIG. 2, the first body 12, where the second body 13 of FIG. 1 has not been screwed, is shown. In this state, a processing tool 31 which includes the valve body 18 and a tool 32 for holding the valve body 18 is prepared. The processing tool 31 is positioned to the valve seat 24 so that a center point S of the valve body 18 locates on a central axis L of the communication hole 16 including the center of the valve seat 24.

In this positioned state, the processing tool 31 and the valve seat 24 are relatively moved by an operation of a processing machine (not shown) in a direction in which the processing tool 31 and the valve seat 24 approach each other. Therefore, the shut-off valve 18a of the valve body 18 which the holding tool 32 holds, that is, a processing surface in the form of a convex spherical surface provided with the processing tool 31, which has the same curvature radius as the shut-off surface 18a of the valve body 18, is pushed against the valve seat 24. The force of the processing machine that pushes the valve body 18 against the valve seat 24 through the holding tool 32 is set so as to have the value more than that of the spring 21 that pushes the valve body 18 against the valve seat 24 through the spring seat 19, for example, under the circumstances where the pressure differential between the pressure in the discharge chamber 52c and the atmosphere is not applied to the valve body 18. By thus pushing the valve body 18 of the processing tool 31 against the valve seat 24, the shape of the valve seat 24 is formed or plastically deformed from a circular line (whose cross sectional view is shown by chain double-dashed line in an enlarged circle A of FIG. 2) to a three-dimensional shape along a part of the shut-off surface 18a of the valve body 18.

It is noted that the process in which the valve seat 24 is plated is performed after the above-mentioned process in which the valve seat 24 is formed by the processing tool 31. This processing order prevents the plating not only from hindering the formation of the valve seat 24 by the processing tool 31 but also from being damaged by the pushing force of the processing tool 31.

The above-mentioned preferred embodiment has the following advantageous effects.
(1) The valve seat 24 is previously plastically deformed into its suitable state by the processing tool 31 so as not to be plastically deformed in a state that a contacting position of the valve body 18 with the valve seat 24 is deviated from the suitable position. Therefore, the communication hole 16 of the relief valve 10 is securely blocked by the valve body 18 which contacts the valve seat 24 along the form of the plastic deformation, thereby preventing the refrigerant gas from leaking from the discharge chamber 52c to the atmosphere in a state that the pressure in the discharge chamber 52c is not extraordinarily high, and improving the performance of the refrigerating circuit 51, accordingly.
(2) The valve body 18 is used for the processing tool 31. By thus forming the valve seat 24 with the actual valve body 18 for use in the relief valve 10, the formation is suitably performed.
(3) In order to push the valve body 18 against the valve seat 24 so as to resist a relatively large pressure differential between the inside and the outside of the refrigerating circuit 51, the relief valve 10 requires the spring 21 whose urging force is relatively large. Heretofore, the valve seat 24 was easily plastically deformed into its unsuitable state by pushing the valve body 18 against the valve seat 24 with a relatively large force. The present embodiment of the present invention is particularly effective to be embodied in the method of processing the relief valve 10.
(4) Since in a case where a carbon dioxide is used as a refrigerant in the refrigerating circuit 51, a high-pressure region (discharge chamber 52c) in the refrigerating circuit 51 becomes extraordinarily high pressure, for example, in comparison with a case where a chlorofluorocarbon is used as the refrigerant in the refrigerating circuit 51, a spring 21 whose urging force is further large is needed. Therefore, in the prior art, the valve body 18 was pushed against the valve seat 24 further strongly and the valve seat 24 was easily plastically deformed into its unsuitable state, accordingly. That is, the present invention is particularly effective to be embodied in a method of processing the relief valve 10 provided in the refrigerating circuit 51 which uses carbon dioxide.

The present invention is modified within the scope of the appended claims, as exemplified below.

As shown in FIG. 3, when the relief valve 10 is processed, a member that is different from the valve body 18 may be used as a processing tool 41 for forming the valve seat 24. The processing tool 41 of FIG. 3 has a rod-like shape and has on the end of the rod-like shape a processing surface 41 a which forms a hemispherical surface functioning as a convex spherical surface. The processing surface 41 a of the processing tool 41 has the same curvature radius as the shut-off surface 18a of the valve body 18. The processing tool 41 is pushed against the valve seat 24 through the processing surface 41 a, thereby forming the valve seat 24.

In the above-modified embodiment, the different member from the valve body 18 is used as the processing tool 41. That is, the different member from the valve body 18 is used exclusively as the processing surface 41 a of the processing tool 41. By providing the processing tool 41 with the exclusive processing surface 41 a, the valve seat 24 is efficiently formed. This technique is suitable for the mass production of the relief valve 10. Such an effect is accomplished even by modifying the above-preferred embodiment so as to replace the valve body 18 of the processing tool 31 by a spherical body used exclusively for forming.

In the above-preferred embodiment, the relief valve 10 has used the spherical body (a ball valve) as the valve body 18. However, the valve body 18 of the relief valve 10 is not limited to the spherical body if it has the shut-off surface in the form of convex spherical surface. A hemispherical body may be used as the valve body 18. That is, the processing method according to the present invention may be adapted for the valve mechanism using the valve body other than the valve body in the form of spherical body.

In the above-preferred embodiment, the relief valve 10 has used the coil spring as the spring 21. However, the spring 21 of the relief valve 10 is not limited to the coil spring. A leaf spring may be used as the spring 21. That is, the processing method according to the present invention may be adapted for the valve mechanism using the spring other than the coil spring.

In the above-preferred embodiment, the present invention is embodied in the method of processing the relief valve 10. In a modified embodiment to the preferred embodiment, the present invention is embodied in a method of processing a valve mechanism which relieves the pressure in a crank chamber of the refrigerant compressor 52 to a low-pressure region in the refrigerating circuit 51 when the pressure becomes extraordinarily high.

The present invention is not limited to be embodied in a method of processing a valve mechanism provided with a refrigerating circuit which uses a carbon dioxide as a refrigerant, but may be embodied in a method of processing a valve mechanism provided with a refrigerating circuit which uses a chlorofluorocarbon as the refrigerant.

The present invention is not limited to be embodied in the method of processing the valve mechanism provided with the refrigerating circuit, but may be embodied in a method of processing a valve mechanism provided with an air circuit or a hydraulic circuit.

Therefore, the present examples and embodiments are to be considered as illustrative and not restrictive and the invention is not to be limited to the details given herein but may be modified.

## Claims

1. A method of processing a valve mechanism which includes a valve body having a shut-off surface in the form of a convex spherical surface, a valve hole whose opening degree is adjusted by the valve body, a valve seat formed by an opening of the valve hole, and a spring which urges the valve body toward the valve seat, the valve mechanism being so formed that the valve body resists the urging force of the spring in accordance with the pressure increase in the valve hole to be separate from the valve seat, **characterized by**:
preparing a processing tool having a processing surface in the form of a convex spherical surface which has the same curvature radius as the shut-off surface of the valve body;
positioning the processing tool to the valve seat; and
forming the valve seat along the form of the processing surface by pushing the processing surface of the processing tool against the valve seat.

2. The method according to claim 1, wherein the valve body is used for the processing tool.

3. The method according to claim 1, wherein a member different from the valve body is used for the processing tool.

4. The method according to any one of claims 1 through 3, wherein the valve mechanism is a relief valve for use in a hydraulic circuit.

5. The method according to claim 4, wherein the hydraulic circuit is a refrigerating circuit for an air conditioner, the refrigerating circuit using a carbon dioxide as a refrigerant.

6. The method according to any one of claims 1 through 5, wherein the force that pushes the processing tool against the valve seat is set so as to have the value more than that of the spring that pushes the valve body against the valve seat, under the circumstances where pressure differential is not applied to the valve body.

7. The method according to any one of claims 1 through 6, further comprising the step of:
plating the valve seat after the forming process of the valve seat.

8. A tool for processing a valve seat being used upon processing a valve mechanism which includes a valve body having a shut-off surface in the form of a convex spherical surface, a valve hole whose opening degree is adjusted by the valve body, the valve seat formed by an opening of the valve hole, and a spring which urges the valve body toward the valve seat, the valve mechanism being so formed that the valve body resists the urging force of the spring in accordance with the pressure increase in the valve hole to be separate from the valve seat, **characterized in that** the processing tool includes a processing surface in the form of a convex spherical surface having the same curvature radius as the shut-off surface of the valve body.

9. The processing tool according to claim 8, wherein the processing surface of the processing tool is the shut-off surface of the valve body.
